# EUROPÄISCHE PATENTSCHRIFT

(11) **EP 0 859 694 B1**
(45) Veröffentlichungstag und Bekanntmachung des Hinweises auf die Patenterteilung: **10.05.2000**
(21) Anmeldenummer: 96939001.2
(22) Anmeldetag: 11.11.1996
(51) Int. Cl.: B29B 17/02, B03B 9/06

(54) **VERFAHREN UND VORRICHTUNG ZUM DEMONTIEREN VON BANDKASSETTEN**
METHOD AND DEVICE FOR THE DISASSEMBLY OF CASSETTES
PROCEDE ET DISPOSITIF POUR DEMONTER DES CASSETTES DE BANDE MAGNETIQUE

(30) Priorität: 11.11.1995 DE 19542078
(43) Veröffentlichungstag der Anmeldung: 26.08.1998
(73) Patentinhaber: EMTEC Magnetics GmbH, 67059 Ludwigshafen (DE)
(72) Erfinder: SCHLATTER, Manfred, D-79111 Freiburg (DE); MÜLLER, Norbert, D-67159 Friedelsheim (DE); HOEFER, Gerhardt, D-96450 Coburg (DE)
(86) Internationale Anmeldenummer: EP9604916
(87) Internationale Veröffentlichungsnummer: WO9718072

(56) Entgegenhaltungen:
- EP-A- 0 577 008
- EP-A- 0 639 406
- DE-A- 4 221 340
- DATABASE WPI Section PQ, Week 9706 Derwent Publications Ltd., London, GB; Class PTW, AN 97-057650 (06) XP002025340 & JP 08 306 157 A (SONY CORP.) , 22.November 1996

## Beschreibung

Die Erfindung betrifft Verfahren und Vorrichtungen zum Demontieren von Bandkassetten mit einem Gehäuse und wenigstens einer damit verbundenen Verschlußklappe und wenigstens einer im Gehäuse befindlichen Bandspule, wobei die Bandkassette an Demontage-stationen vorbeitransportiert wird.

Aus der DE-A 42 21 340 ist eine Vorrichtung zum automatischen Zerlegen von Kassetten bekannt. Hiebei wird das Kassettengehäuse durch in die Kassette teilweise eindringende, in entgegengesetzer Richtung bewegbare Elemente, die auf Walzen oder Bändern angeordnet sind, zerlegt. Die zum Teil noch anhaftenden Innenteile werden anschließend mittels Trenneinrichtungen vom Gehäuse separiert.

EP-A 0 577 008 beschreibt eine Kassette, die für besonders einfaches Recycling konzipiert wurde, da mit Ausnahme des Magnetbandes und der Frontklappenfeder alle Bestandteile der Kassette aus dem gleichen Kunststoffmaterial hergestellt sind. Die Kassette weist zur Demontage von Innenteile mehrere Öffnungen auf. So ist es z.B. möglich die Bandhalteklammern von außen zu entfernen und damit das Magnetband ohne Zerlegen des Gehäuses zu entnehmen. Eine andere Öffnung ermöglicht es, daß die nach Entfernen der Frontklappe freiwerdende Frontklappenfeder aus dem Kassettengehäuse herausfallen kann.

Aus der EP-A C 639 406 der Anmelderin ist ein Verfahren und Vorrichtungen zum Aufbereiten von Magnetbandkassetten, insbesondere Videokassetten, bekannt. Materialidentifizierungseinrichtungen steuern den Aufbereitungsprozess materialgerecht. Bei diesem Verfahren werden jedoch die Videokassetten über längere Strecken zu Demontagestationen gefördert, bevor die Kassetten in ihre Einzelteile zerlegt sind. Da in diesem Fall die Verschlußklappe mit dem Kassettengehäuse verbunden bleibt, können auf dem Transportweg und bei der weiteren Demontage Schwierigkeiten auftreten.

Die Erfindung hat sich die Aufgabe gestellt, solche Schwierigkeiten zu vermeiden.

Die Aufgabe wird mit einem Verfahren zum Demontieren von Bandkassetten mit einem Gehäuse und wenigstens einer damit verbundenen Verschlußklappe und wenigstens einer im Gehäuse befindlichen Bandspule, wobei die Bandkassette an Demontage-stationen vorbeitransportiert wird, gelöst, wenn vor oder während oder kurz nach dem Öffnen des Gehäuses an der entsprechenden Demontagestation ein Trennen der Verschlußklappe(n) vom Gehäuse erfolgt.

Dabei kann die Verschlußklappe
vor dem Öffnen des Gehäuses, also bereits bei geschlossenem Gehäuse,
während des Öffnens des Gehäuses, also im wesentlichen gleichzeitig mit dem Entfernen der Verbindungselemente, aber bei noch geschlossenem Gehäuse oder mit dem Trennen des Gehäuses, z.B. in Boden- und Deckelteil, oder
kurz nach dem Öffnen des Gehäuses, also bei bereits getrennten Gehäuseteilen, also z.B. Boden- und Deckelteilen, in geeigneter, noch zu beschreibender Weise entfernt werden.

Dadurch wird sichergestellt, daß
1. die Verschlußklappe sich nicht auf dem weiteren Transportweg der zu demontierenden Kassette unbeabsichtigt lösen und dadurch automatisierte Demontage-Operationen behindern oder blockieren kann und
2. die Verschlußklappe von der Gehäuse-Längsseite entfernt wird, wo sie, solange sie vorhanden ist, den Eintritt von z.B. Greifelementen der Demontage-Stationen blockiert,
3. wenn die Verschlußklappe aus einem anderen Kunststoff als das Gehäuse besteht, eine frühzeitige Material-Trennung erfolgen kann.

In praktischer Ausbildung des Verfahrens kann ein Trennen der Verschlußklappe(n) durch Abschlagen oder -schneiden von wenigstens einer Ecke des Gehäuses, an der ein Ende der Verschlußklappe angeordnet ist, vorgenommen werden, so daß ein freies Ende der Verschlußklappe entsteht.

In Weiterführung des Trennvorganges kann das freie Ende der Verschlußklappe in eine Richtung gedreht werden, so daß das andere Ende der Verschlußklappe vom Gehäuse getrennt wird.

Für Bandkassetten mit wenigstens einer Verschlußklappe, die an einer Längsseite der Bandkassette angeordnet ist und mittels Seitenteilen mit Befestigungszapfen daran die Querseiten der Kassette umgreift, kann das Trennen der Verschlußklappe(n) durch Eingreifen zwischen ein Seitenteil der Verschlußklappe und die anliegende Querseite des Gehäuses und durch Herausbiegen des Befestigungszapfens am Seitenteil aus dem Gehäuse erfolgen, wodurch ein freies Ende der Verschlußklappe entsteht.

Dadurch wird die Flexibilität der Seitenteile vorteilhaft zur Trennung benutzt. Eine Variante dazu ist das Eingreifen zwischen jedes der beiden Seitenteile der Verschlußklappe und jede der anliegenden Querseiten des Gehäuses und durch Zerstören der Befestigungszapfen.

In einer weiteren Ausführung des Verfahrens, wobei die Bandkassette ein aus Boden- und Deckelteil bestehendes Gehäuse aufweist und in wenigstens einem der Boden- und Deckelteile an die Verschlußklappe anschließende Öffnungen aufweist, kann das Trennen der Verschlußklappe(n) mittels Druckes durch wenigstens eine der Öffnungen hindurch auf die Verschlußklappe erfolgen.

Es ist auch vorteilhaft, wenn das freie Ende der Verschlußklappe(n) im wesentlichen in der Ebene des Gehäuse verschwenkt wird. Der Drehwinkel kann dabei bis etwa 60°C betragen. Dadurch kann ein Befestigungszapfen der Verschlußklappe aus seiner Gehäusewandöffnung herausgedreht werden zur Trennung der Verschlußklappe.

Eine vorteilhafte Vorrichtung zum Demontieren von Bandkassetten mit einem Gehäuse und wenigstens einer damit verbundenen Verschlußklappe und wenigstens einer im Gehäuse befindlichen Bandspule, wobei die Bandkassette mittels einer Transporteinrichtung an Demontagestationen vorbeibewegt werden, ist erfindungsgemäß gegeben, wenn eine Öffnungseinrichtung für das Gehäuse und wenigstens eine in Transportrichtung gesehen davor parallel oder gleich dahinter angeordnete Trennvorrichtung für die Verschlußklappe vom geschlossenen bzw. geöffneten Gehäuse vorgesehen sind. Dadurch werden die erfindungsgemäß beschriebenen Vorteile erhalten.

Eine weitere zweckmäßige Ausbildung der Vorrichtung für eine Bandkassette, bei der die Verschlußklappe über Befestigungszapfen an jedem Ende mit dem Gehäuse verbunden ist, wird dadurch bereitgestellt, daß die Trennvorrichtung aus einer Schneideinrichtung und einer Schwenkvorrichtung besteht, wovon die Schneideinrichtung einen der Befestigungszapfen vom Gehäuse trennt oder denselben zerstört, so daß ein freies Ende der Verschlußklappe entsteht und die Schwenkvorrichtung das freie Ende der Verschlußklappe in einer Richtung dreht, daß der andere Befestigungszapfen vom Gehäuse getrennt oder zerstört wird.

Alternativ kann die Trennvorrichtung auch aus einer Druckeinrichtung bestehen, womit die Verschlußklappe vom Gehäuse entfernt wird.

Ausführungsbeispiele sind in der Zeichnung anhand von Vorrichtungen dargestellt und erläutert.

Die Zeichnung stellt dar in
- Figur 1: eine handelsübliche VHS Videokassette perspektivisch
- Figur 2: eine Draufsicht von oben auf den Deckelteil des Gehäuses der Kassette nach Figur 1
- Figur 2A,2B: eine Ansicht der Querseiten des Gehäuses
- Figur 3: eine Draufsicht auf den Bodenteil des Gehäuses von unten
- Figur 4: eine Draufsicht gemäß Figur 2 mit Trennvorrichtungen
- Figur 4A: eine Ansicht der Vorder-Längsseite der auf dem Deckelteil liegenden Kassette
- Figur 5: eine Draufsicht auf den Bodenteil gemäß Figur 3 mit Pfeilen zur Darstellung der Trennvorgänge
- Figur 6A-6C: eine Fördereinrichtung mit Demontagestationen, wobei die Klappentrennstation vor, innerhalb oder nach der Öffnungsstation angeordnet ist.

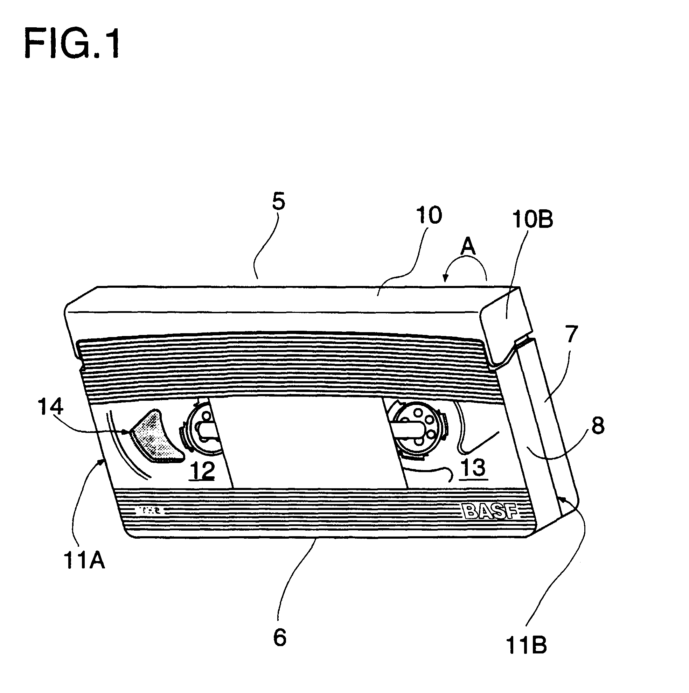

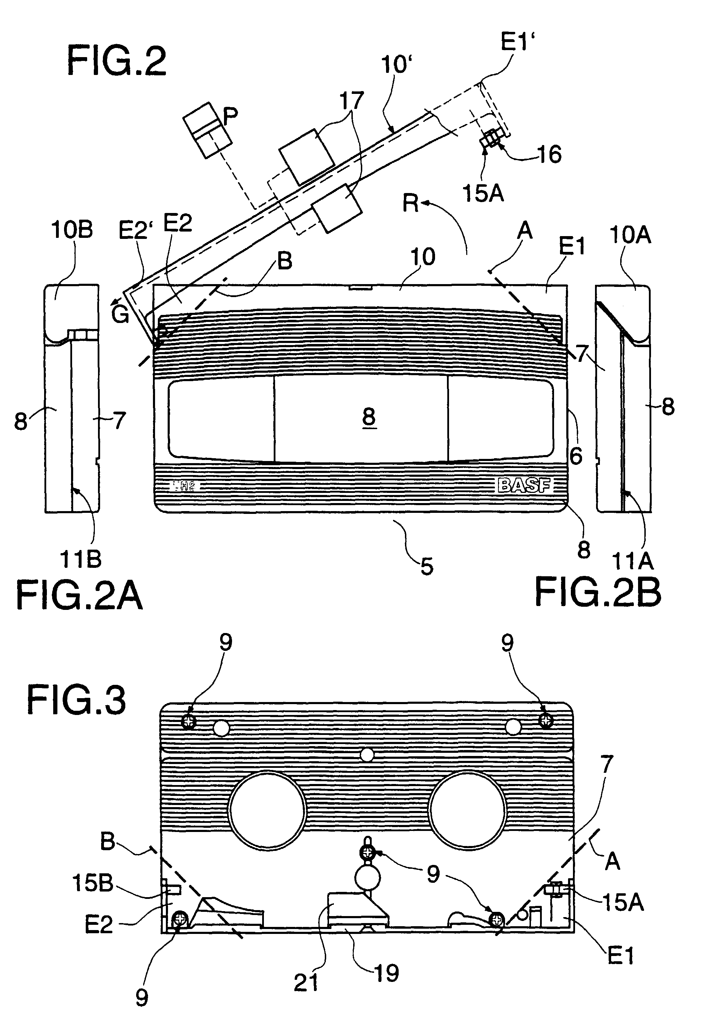

Die Videokassette 5 besteht aus einem Gehäuse 6, das aus dem Bodenteil 7 und dem Deckelteil 8, z.B. durch Schraubverbindungen 9 (s. Fig. 3) verbunden ist, einer Verschlußklappe 10, die in Richtung des Pfeils A am Gehäuse 6, insbesondere an den Querseiten 11A und 11B, schwenkbar gelagert ist. Durch die Fenster im Deckelteil 8 sind die Bandspulen 12 und 13 sichtbar (Fig. 1), wobei die eine Bandspule 12 mit Band 14 bewickelt ist und die andere Bandspule 13 leer ist. Die Verschlußklappe 10 ist mit Seitenteilen 10A und 10B versehen.

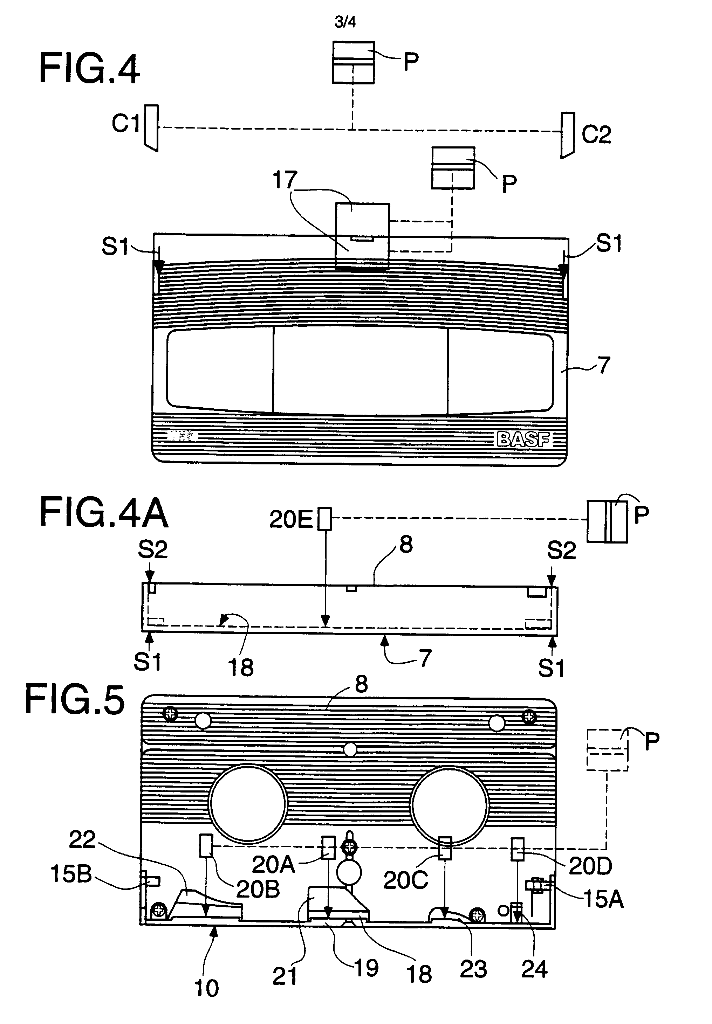

Die Figuren 2 und 4 zeigen die Oberseite der Videokassette 5 und die Figuren 3 und 5 deren Unterseite, jeweils schematisch ohne sichtbare Spulen und Band.

In den Ansichts-Zeichnungen 2A, 2B der Querseiten 11B bzw. 11A sind die Seitenteile 10B und 10A der Verschlußklappe 10 in Draufsicht sichtbar.

Wird in Figur 2 oder 3, z.B. der Schnitt A, mittels einer geeigneten Schlag- oder Schneidvorrichtung, z.B. einer Fallmesservorrichtung, ausgeführt und die obere rechte Kassettenecke E1 abgetrennt, wird gleichzeitig die Verbindung der Verschlußklappe 10 mit dem Gehäuse 6, hier der Querseite 11B, gelöst, da der Befestigungszapfen 15A - und auch die Schließfeder 16 - abgetrennt werden, siehe den gestrichelten Teil E1 der bereits gedrehten Verschlußklappe 10'.

Die Drehung der Verschlußklappe 10 in die Lage 10' erfolgt mittels einer drehbar gelagerten, geeigneten Greifeinrichtung 17, i die geeignet betätigt, z.B. im Ausschnitt 18 des Bodenteils 7 die Vorderseite 19 der Verschlußklappe 10 ergreift und dieselbe in Richtung des Pfeils R dreht. Entweder bricht der Befestigungszapfen 15B am anderen Seitenteil 10A der Verschlußklappe 10' ab, oder beim gleichzeitigen Verschieben der Verschlußklappe 10' in Richtung G rastet der Befestigungszapfen 15B aus der Querseite 11A des Gehäuses 6 aus. In beiden Fällen kann die Verschlußklappe dem Kunststoff-Recycling zugeführt werden. Die Feder 16 kann entfernt werden, so daß auch das Eckteil E1 zum Kunststoff-Recycling transportiert werden kann. Die beschriebene Drehung der Verschlußklappe kann auch mit denselben Vorteilen an der anderen Ecke und in die andere Drehrichtung erfolgen.

Es ist in Figur 2, wie mit der zweiten Strichlinie angedeutet ist, auch möglich, einen zweiten Schnitt B auszuführen und so auch die linke Kassettenecke E2 abzutrennen.

In diesem Fall braucht der Greifer 17 nur den Mittelteil der Verschlußklappe 10 ohne Eckteile E1 und E2 zu entsorgen. Im Boden-Eckteil E1, das beim Eckenschnitt anfällt, kann auch eine Verriegelungsfeder (nicht dargestellt) vorhanden sein, die zusammen mit der Schließfeder 16, z.B. mittels einer Mahleinrichtung für die Boden- und Klappeneckteile E1 entfernbar sind und die mittels einer Magneteinrichtung (nicht dargestellt) vom Kunststoffmaterial trennbar ist, so daß wiederum die übrigen Teile zum Kunststoff-Recycling gebracht werden können.

In Figuren 4A und 4 ist schematisch dargestellt, Pfeile S, daß die Seitenteile 10A, 10B der Verschlußklappe 10 durch Schneidwerkzeuge C1 und C2 abgetrennt werden können. Dabei werden insbesondere die in Figur 5 angedeuteten Befestigungszapfen 15A und B zerstört, und die Verschlußklappe 10 wird mittels der Greifelemente 17 oder gleichwertiger Einrichtungen abgezogen und dem Kunststoff-Recycling zugeführt.

Dieser Trennvorgang, der an beiden Stellen, Pfeile S1 (Deckelteil 8) oder Pfeile S2 (Bödenteil 7) gleichzeitig oder auch nacheinander erfolgen kann, führt dazu, daß die Schließfeder 16 mit dem Zapfen 15A von der Verschlußklappe 10 getrennt wird. Die Verriegelungsfeder, die eventuell im Boden-Eckteil E1 vorhanden ist, sollte dann zweckmäßig separat entfernt werden.

In Figur 4A ist nochmals angedeutet, an welchen Stellen S1 an der Oberseite (Deckelteil 8) bzw. S2 an der Unterseite (Bodenteil 7) die Schneidwerkzeuge C1 und C2 zwischen Seitenteilen 10A, 10B und Querseite 11A bzw. 11B eingreifen können.

Als Schneidwerkzeuge C1, C2 kommen Keilschneiden und Messerschneiden oder Säge-Elemente in Frage.

In Figur 5 und teilweise auch in Figur 4A ist eine weitere Trennmöglichkeit für die Verschlußklappe 10 dargestellt. Dabei soll die Verschlußklappe 10 mittels wenigstens einer Druckvorrichtung von innen nach außen gedrückt und dadurch vom Gehäuse 6 getrennt werden.

Als Druckvorrichtungen sind Druckkörper 20A bis 20D dargestellt, die in Figur 5 schräg von oben in die Ausschnitte 21-24 eintreten und gegen die Vorderwand 19 der Verschlußklappe 10 solange drücken, bis die Befestigungszapfen 15A und 15B brechen oder sich wenigstens lösen.

Es können auch weniger als 4 Druckeinrichtungen 20A bis 20D benutzt werden. Die Druckbeaufschlagung sollte bei ca. 40 N bei 4 Druckeinrichtungen betragen.

In Figur 4A ist der Fall dargestellt, daß eine Druckeinrichtung 20E, z.B. durch den Ausschnitt 21 hindurch, im wesentlichen senkrecht, auf die Vorderseite 19 der Verschlußklappe 10 wirkt und ein Herausbrechen derselben bewerkstelligt.

Einige der Druckeinrichtungen 20A-20E können durchaus kombiniert werden, so daß mit geringem technischen Aufwand eine große Demontage-Wirkung erzielbar ist. Die demontierten vollständigen oder teilweisen Verschlußklappen werden mittels Greifern, wie oben beschrieben, oder direkt in geeigneten Behältern zum Kunststoff-Recycling transportiert.

Als Krafterzeugereinrichtungen für die Greifvorrichtungen 17 und die Druckeinrichtungen 20A-20E sind schematisch Zylinder P dargestellt, die mit gestrichelten Wirkungslinien mit den Operationseinheiten 20A-20E verbunden sind. Die Zylinder P sollen hydraulische, pneumatische oder elektromagnetische Krafterzeuger darstellen.

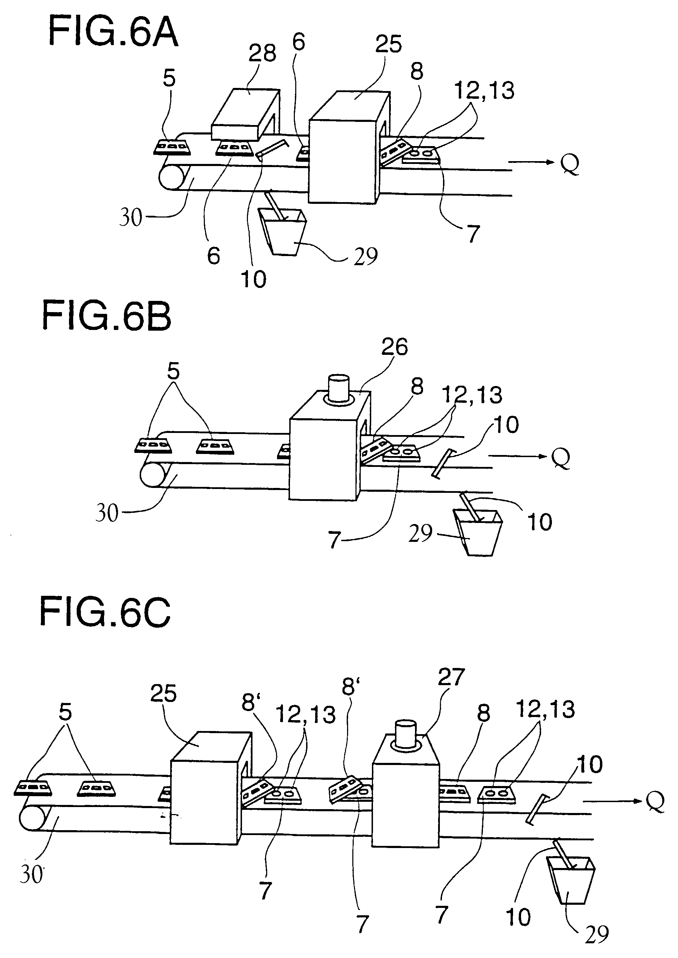

Figuren 6A-6C zeigen je eine schematische Darstellung der Anordnung der Öffnungs- und Trennstation(en) an einer Demontagelinie für Bandkassetten nach der vorliegenden Erfindung.

In Figuren 6A-6C werden die Bandkassetten 5 jeweils auf das Förderband 30 gesetzt, das dieselben in Richtung Q weitertransportiert. Die Stationen sind in den Figuren 6A-6C unterschiedlich angeordnet.

In Figur 6A ist die Kassette 5 noch geschlossen, die zur Klappentrennstation 28 gefördert wird, in der die Verschlußklappe 10 vom Gehäuse 6 nach einem der oben beschriebenen Verfahren und mittels der beschriebenen Vorrichtungen getrennt werden. Noch vor Erreichen der Öffnungsstation 25 fällt - eventuell mittels einer nicht dargestellten Separiereinrichtung - die Klappe 10 in einen Behälter 29 für zu recyclenden Kunststoff. Die Öffnungsstation 25 öffnet das Gehäuse 6 und zerlegt es in Boden- und Deckelteile 7 bzw. 8 mit der oder den Bandspulen 12 bzw. 13 darin.

In Figur 6B werden die geschlossenen Kassetten 5 direkt einer Station 26 zugeführt, in der sowohl eine Öffnungseinrichtung als auch eine Klappen-Trennvorrichtung befindlich ist. Nach der Station 26 sind die Boden- und Deckelteile 7 und 8 und die Verschlußklappe 10 als einzelne Teile auf dem Band 30 sichtbar und die Klappe 10 fällt, wie in Figur 6A, in den Kunststoff-Recycling-Behälter 29. In diesem Beispiel kann die Klappe 10 also im wesentlichen während des Öffnens der Kassette getrennt werden.

Figur 6C zeigt schließlich die Trennung der Klappe 10 in einer Klappentrennstation 27, worin die bereits in der Öffnungsstation 25 in das Deckelteil 8, das noch mit der Klappe 10 verbunden ist, und das Bodenteil 7 getrennt, also die Kassette geöffnet ist.

Figur 6C zeigt schließlich die Öffnungsstation 25, in der das Deckelteil 8', das noch mit der Klappe 10 verbunden ist, und das Bodenteil 7 voneinander getrennt werden, die Kassette 5 also geöffnet ist, und eine direkt danach angeordnete Klappentrennstation 27, in der die Klappe 10 vom Deckelteil 8 getrennt wird und danach, wie in Figur 6B, in den Recycling-Behälter 29 entsorgt wird.

Die in jedem der Fälle, Figuren 6A-6C, noch auf dem Förderband 30 befindlichen Deckelteile und Bodenteile 8 bzw. 7 werden in Richtung Q weitergefördert, wo die restlichen, nicht mehr beschriebenen und dargestellten Demontageoperationen stattfinden, ohne daß dann die Verschlußklappe noch irgendwelche Störungen oder Beschädigungen verursachen könnte.

Als "Verschlußklappe" im Sinne der Erfindung sind z.B. auch Schiebe-Verschlüsse zu verstehen wie sie z.B. bei Disketten oder DCC-Cassetten verwendet werden.

Verfahren und Vorrichtungen zum Teil-Demontieren von Bandkassetten mit wenigstens einer Verschlußklappe bestehen darin, daß die Verschlußklappe zu einem frühen Zeitpunkt von der Kassette bzw. vom Kassettengehäuse getrennt wird, noch vor, während oder kurz nach der Öffnung der Kassette.

Es werden mehrere Verfahrensmethoden und Vorrichtungsbeispiele angegeben. Die Trennmethoden und -vorrichtugen sind für alle Bandkassetten mit einer oder mehreren Verschlußklappen zweckmäßig anwendbar, wobei es sich dabei um jede Art von Audio-, Video- und Datenkassetten handeln kann.

## Patentansprüche

1. Verfahren zum Demontieren von Bandkassetten (5) mit einem Gehäuse (6) und wenigstens einer damit verbundenen Verschlußklappe (10) und wenigstens einer im Gehäuse (6) befindlichen Bandspule (12, 13), wobei die Bandkassette (5) an Demontagestationen vorbeitransportiert wird, dadurch gekennzeichnet, daß vor oder während oder kurz nach dem Öffnen des Gehäuses (6) an einer Demontagestation (28, 26, 27) ein Trennen der Verschlußklappe(n) (10) vom Gehäuse (6) erfolgt.

2. Verfahren nach Anspruch 1, dadurch gekennzeichnet,daß das Trennen der Verschlußklappe(n) (10) vom Gehäuse (6) durch Abschlagen oder Abschneiden von wenigstens einer Ecke (E1, E2) des Gehäuses (6) erfolgt, so daß ein freies Ende der Verschlußklappe (10) entsteht.

3. Verfahren nach Anspruchs 1 dadurch gekennzeichnet, daß das Trennen der Verschlußklappe(n) (10) vom Gehäuse (6) durch Eingreifen zwischen ein Seitenteil (10A, 10B) der Verschlußklappe (10) und die anliegende Querseite (11A, 11B) des Gehäuses (6) und durch Herausbiegen des Befestigungszapfens (15A, 15B) am Seitenteil (10A, 10B) aus dem Gehäuse (6) erfolgt, wodurch ein freies Ende der Verschlußklappe(10) entsteht.

4. Verfahren nach Anspruchs 1, dadurch gekennzeichnet,daß das Trennen der Verschlußklappe(n) (10) vom Gehäuse (6) mittels Druckes durch wenigstens eine der Öffnungen (21 bis 24) hindurch auf die Verschlußklappe (10) erfolgt.

5. Verfahren nach Anspruch 3,dadurch gekennzeichnet, daß das Trennen der Verschlußklappe(n) (10) vom Gehäuse (6) durch Eingreifen zwischen jedes der beiden Seitenteile (10A, 10B) der Verschlußklappe (10) und jede der anliegenden Querseiten (11A, 11B) des Gehäuses (6) und Zerstören der Befestigungszapfen (15A, 15B) erfolgt.

6. Verfahren nach Anspruch 2 oder 3, dadurch gekennzeichnet, daß das freie Ende der Verschlußklappe(n) (10) in eine Richtung gedreht wird, so daß das andere Ende der Verschlußklappe(10) vom Gehäuse (6) getrennt wird.

7. Verfahren nach Anspruch 6, dadurch gekennzeichnet,daß das freie Ende der Verschlußklappe(n) (10) im wesentlichen in der Ebene des Gehäuses (6) verschwenkt wird.

8. Verfahren nach Anspruch 7, dadurch gekennzeichnet, daß der Dreh- oder Schwenkwinkel etwa 60° beträgt.

9. Vorrichtung zum Demontieren von Bandkassetten (5) mit einem Gehäuse (6) und wenigstens einer damit verbundenen Verschlußklappe (10) und wenigstens einer im Gehäuse befindlichen Bandspule (12, 13), wobei die Bandkassetten (5) mittels einer Transporteinrichtung (30) an Demontagestationen vorbeibewegt werden, gekennzeichnet durch eine Öffnungseinrichtung (25 bzw. 26) für das Gehäuse (6) und wenigstens eine in Transportrichtung gesehen davor oder parallel oder gleich dahinter angeordnete Trennvorrichtung (28 bzw. 26 bzw. 27) für die Verschlußklappe (10) vom geschlossenen bzw. geöffneten Gehäuse (6).

10. Vorrichtung nach Anspruch 9, dadurch gekennzeichnet, daß die Trennvorrichtung (28, 26, 27) aus einer Schneideinrichtung und einer Schwenkeinrichtung besteht, wovon die Schneideinrichtung einen der Befestigungszapfen (15A oder 15B) vom Gehäuse (6) trennt oder denselben zerstört, so daß ein freies Ende der Verschlußklappe (10) entsteht und die Schwenkeinrichtung (17) das freie Ende der Verschlußklappe (10) in einer Richtung (R) dreht, daß der andere Befestigungszapfen (15B oder 15A) vom Gehäuse (6) getrennt oder zerstört wird.

11. Vorrichtung nach Anspruch oder 10, dadurch gekennzeichnet, daß die Trennvorrichtung (28, 26, 27) aus einer Schneideinrichtung besteht, die wenigstens eine Ecke (E1, E2) des Gehäuses (6), an der ein Ende der Verschlußklappe (10) angeordnet ist, abtrennt.

12. Vorrichtung nach Anspruch oder 10, dadurch gekennzeichnet, daß die Trennvorrichtung (28, 26, 27) aus einer aus einer Druckeinrichtung (20A - 20E) besteht, womit die Verschlußklappe (10) vom Gehäuse (6) entfernt wird.

## Claims

1. A process for disassembling tape cassettes (5) having a housing (6) and at least one closure flap (10) connected thereto and at least one tape reel (12, 13) located in the housing (6), the tape cassette (5) being transported past disassembly stations, wherein a separation of the closure flap(s) (10) from the housing (6) takes place before or during or shortly after the opening of the housing (6) at a disassembly station (28, 26, 27).

2. A process as claimed in claim 1, wherein the separation of the closure flap(s) (10) from the housing (6) takes place by knocking off or cutting off at least one corner (E1, E2) of the housing (6), with the result of producing a free end of the closure flap (10).

3. A process as claimed in claim 1, wherein the separation of the closure flap(s) (10) from the housing (6) takes place by reaching between a side part (10A, 10B) of the closure flap (10) and the adjoining transverse side (11A, 11B) of the housing (6) and by bending out from the housing (6) the fastening lug (15A, 15B) on the side part (10A, 10B), thereby producing a free end of the closure flap (10).

4. A process as claimed in claim 1, wherein the separation of the closure flap(s) (10) from the housing (6) takes place by means of pressure on the closure flap (10) through at least one of the openings (21 to 24).

5. A process as claimed in claim 3, wherein the separation of the closure flap(s) (10) from the housing (6) takes place by reaching between each of the two side parts (10A, 10B) of the closure flap (10) and each of the adjoining transverse sides (11A, 11B) of the housing (6) and destroying the fastening lugs (15A, 15B).

6. A process as claimed in claim 2 or 3, wherein the free end of the closure flap(s) (10) is pivoted in one direction, with the result that the other end of the closure flap (10) is separated from the housing (6).

7. A process as claimed in claim 6, wherein the free end of the closure flap(s) (10) is swiveled substantially in the plane of the housing (6).

8. A process as claimed in claim 7, wherein the pivoting or swiveling angle is about 60°.

9. Apparatus for disassembling tape cassettes (5) having a housing (6) and at least one closure flap (10) connected thereto and at least one tape reel (12, 13) located in the housing, the tape cassettes (5) being moved past disassembly stations by means of a transporting device (30), which apparatus comprises an opening device (25 or 26) for the housing (6) and at least one device (28 or 26 or 27) for separating the closure flap (10) from the closed or opened housing (6), arranged in front of or parallel to or directly behind said opening means, seen in the transporting direction.

10. Apparatus as claimed in claim 9, wherein the separating device (28, 26, 27) comprises a cutting device and a swiveling device, of which the cutting device separates one of the fastening lugs (15A or 15B) from the housing (6) or destroys it, with the result of producing a free end of the closure flap (10), and the swiveling device (17) pivots the free end of the closure flap (10) in one direction (R), with the result that the other fastening lug (15B or 15A) is separated from the housing (6) or destroyed.

11. Apparatus as claimed in claim 9 or 10, wherein the separating device (28, 26, 27) comprises a cutting device which detaches at least one corner (E1, E2) of the housing (6), at which one end of the closure flap (10) is arranged.

12. Apparatus as claimed in claim 9 or 10, wherein the separating device (28, 26, 27) comprises a pressure-exerting device (20A - 20E), whereby the closure flap (10) is removed from the housing (6).

## Revendications

1. Procédé pour démonter des cassettes à bande (5) avec un boîtier (6) et au moins un clapet de fermeture (10) y étant relié et au moins une bobine de bande (12, 13) se trouvant dans le boîtier (6), la cassette à bande (5) étant transportée jusqu'aux stations de démontage, caractérisé en ce qu'une séparation du (des) clapet(s) de fermeture (10) du boîtier (6) s'effectue à une station de démontage (28, 26, 27) avant ou pendant ou peu après l'ouverture du boîtier (6).

2. Procédé suivant la revendication 1, caractérisé en ce que la séparation du (des) clapet(s) de fermeture (10) du boîtier (6) s'effectue par cassage ou découpage d'au moins un coin (E1, E2) du boîtier (6), de sorte qu'une extrémité libre du clapet de fermeture (10) apparaisse.

3. Procédé suivant la revendication 1, caractérisé en ce que la séparation du (des) clapet(s) de fermeture (10) du boîtier (6) s'effectue par prise entre une partie latérale (10A, 10B) du clapet de fermeture (10) et le côté transversal adjacent (11A, 11B) du boîtier (6) et par flexion vers l'extérieur du tourillon de fixation (15A, 15B) sur la partie latérale (10A, 10B) hors du boîtier (6), une extrémité libre du clapet de fermeture (10) apparaissant ainsi.

4. Procédé suivant la revendication 1, caractérisé en ce que la séparation du (des) clapet(s) de fermeture (10) du boîtier (6) s'effectue au moyen de la pression par au moins une des ouvertures (21 à 24) sur le clapet de fermeture (10).

5. Procédé suivant la revendication 3, caractérisé en ce que la séparation du (des) clapet(s) de fermeture (10) du boîtier (6) s'effectue par prise entre chacune des deux parties latérales (10A, 10B) du clapet de fermeture (10) et chacun des côtés transversaux adjacents (11A, 11B) du boîtier (6) et par destruction des tourillons de fixation (15A, 15B).

6. Procédé suivant la revendication 2 ou 3, caractérisé en ce que l'extrémité libre du (des) clapet(s) de fermeture (10) est tournée dans une direction, de sorte que l'autre extrémité du clapet de fermeture (10) soit séparée du boîtier (6).

7. Procédé suivant la revendication 6, caractérisé en ce que l'extrémité libre du (des) clapet(s) de fermeture (10) est pivotée essentiellement sur la surface plane du boîtier (6).

8. Procédé suivant la revendication 7, caractérisé en ce que l'angle de rotation ou de pivotement s'élève à environ 60°.

9. Dispositif pour démonter des cassettes à bande (5) avec un boîtier (6) et au moins un clapet de fermeture (10) y étant relié et au moins une bobine de bande (12, 13) se trouvant dans le boîtier, les cassettes à bande (5) étant déplacées jusqu'aux stations de démontage au moyen d'un mécanisme de transport (30), caractérisé par un mécanisme d'ouverture (25 ou, selon le cas, 26) pour le boîtier (6) et au moins un dispositif de séparation (28 ou, selon le cas, 26 ou, selon le cas, 27) agencé, vu dans la direction de transport, devant ou parallèlement ou juste derrière, pour le clapet de fermeture (10) du boîtier (6) fermé ou, selon le cas, ouvert.

10. Dispositif suivant la revendication 9, caractérisé en ce que le dispositif de séparation (28, 26, 27) est constitué d'un mécanisme de découpe et d'un mécanisme de pivotement, dont le mécanisme de découpe sépare un des tourillons de fixation (15A ou 15B) du boîtier (6) ou détruit celui-ci, de sorte qu'une extrémité libre du clapet de fermeture (10) apparaisse et que le mécanisme de pivotement (17) tourne l'extrémité libre du clapet de fermeture (10) dans une direction (R), de sorte que l'autre tourillon de fixation (15B ou 15A) soit séparé du boîtier (6) ou détruit.

11. Dispositif suivant la revendication 9 ou 10, caractérisé en ce que le dispositif de séparation (28, 26, 27) est constitué d'un mécanisme de découpe, qui sépare au moins un coin (E1, E2) du boîtier (6) sur lequel est agencée une extrémité du clapet de fermeture (10).

12. Dispositif suivant la revendication 9 ou 10, caractérisé en ce que le dispositif de séparation (28, 26, 27) est constitué d'un mécanisme de pression (20A - 20E) avec lequel le clapet de fermeture (10) est séparé du boîtier (6).
